# EUROPÄISCHE PATENTSCHRIFT

(11) **EP 1 643 833 B1**
(45) Veröffentlichungstag und Bekanntmachung des Hinweises auf die Patenterteilung: **03.12.2008**
(21) Anmeldenummer: 04740113.8
(22) Anmeldetag: 21.06.2004
(51) Int. Cl.: A01N 25/02, A01N 25/04, A01N 43/653, A01N 43/54, A01N 37/50

(54) **AGROCHEMISCHE FORMULIERUNGEN**
AGROCHEMICAL FORMULATIONS
FORMULATIONS AGROCHIMIQUES

(30) Priorität: 02.07.2003 DE 10329714
(43) Veröffentlichungstag der Anmeldung: 12.04.2006
(73) Patentinhaber: Bayer CropScience AG, 40789 Monheim (DE)
(72) Erfinder: RÖCHLING, Andreas, 40764 Langenfeld (DE); ROSENFELDT, Frank, 40764 Langenfeld (DE)
(86) Internationale Anmeldenummer: PCT/EP2004/006673
(87) Internationale Veröffentlichungsnummer: WO 2005/002334

(56) Entgegenhaltungen:
- EP-A- 0 235 773
- EP-A- 0 281 810
- EP-A- 0 655 197
- EP-A- 0 933 025
- EP-A- 1 023 837
- EP-A- 1 025 757
- WO-A-99/65301
- WO-A-02/091828
- US-A- 4 415 355
- US-A- 5 597 840
- US-A- 5 731 264
- US-A1- 2003 083 201
- DATABASE CHEMABS [Online] CHEMICAL ABSTRACTS SERVICE, COLUMBUS, OHIO, US; S.DUTZMANN ET AL.: "HEC5725: a novel leaf-systemic strobilurin fungicide" XP002304441 gefunden im STN-INTERNATIONAL Database accession no. 139:64766 & BCPC CONFERENCE -- PESTS DISEASES, Bd. 1, 2002, Seiten 365-370,

## Beschreibung

Die vorliegende Erfindung betrifft neue agrochemische Formulierungen auf Basis von Ethylendiaminalkoxylat-Derivat-Emulgatoren, ein Verfahren zur Herstellung dieser Formulierungen, und deren Verwendung zur Applikation der enthaltenen Wirkstoffe.

Es sind bereits zahlreiche Formulierungen von Pflanzenschutzmitteln bekannt, bei denen in dem emulgierbaren Konzentrat (EC-Formulierung) ein nicht wasserlöslicher Wirkstoff zusammen mit einem wasserlöslichen Lösungsmittel enthalten ist. Als Lösungsmittel für einen Wirkstoff wurden beispielsweise N-Methyl-Pyrrolidon (NMP) oder Dimethylsulfoxid (DMSO) verwendet.

WO02091828 beschreibt emulgierbare Konzentrate von Strobilurinfungiziden die beim Verdünnen keine Kristallisation zeigen.

EP0933025 beschreibt emulgierbare Konzentrate von Pestiziden (z.B. Trifloxystrobin), die als Lösungsmittel Pflanzenölester, ein wasserlösliches Co-Lösungsmittel und ein System von oberflächenaktiven Verbindungen, zusammengesetzt aus mindestens einer anionischen und mindestens einer nichtionischen oberflächenaktiven Verbindung, enthalten.

Bei der Anwendung wird das Konzentrat mit Wasser verdünnt.

Nachteilig bei den bekannten Formulierungen ist, dass bei der Anwendung sowohl das wasserlösliche Lösungsmittel ins Wasser diffundiert als auch Wasser in das emulgierte öltröpfchen, bestehend aus Lösungsmittel und Wirkstoff, hineindiffundiert. Dadurch wird die Suspension bzw. die Emulsion destabilisiert und der Wirkstoff kristallisiert aus der wässrigen gebrauchsfertigen Emulsion oder Suspension (Spritzbrühe) aus.

Aufgabe der vorliegenden Erfindung war es nun, eine Formulierung zu finden, die das Verdünnen der wässrigen gebrauchsfertigen Emulsion oder Suspension mit Wasser ermöglicht, ohne dass der Wirkstoff auskristallisiert.

Es wurden nun neue agrochemische Formulierungen gefunden, die
a) mindestens Fluoxastrobin als agrochemischen Wirkstoff, 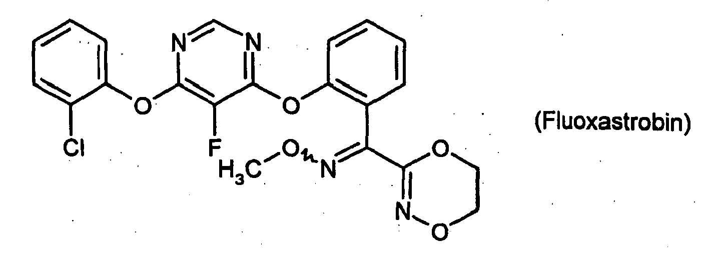
b) gegebenenfalls einen Penetrationsfdrderer,
c) gegebenenfalls einen Emulgator,
d) gegebenenfalls Zusatzstoffe,
dadurch gekennzeichnet, dass die Formulierung γ-Butyrolacton und mindestens ein Ethylendiaminalkoxylat-Derivat enthält, welches als Emulsionsstabilisator und / oder als Kristallisationsinhibitor wirkt.

Weiterhin wurde gefunden, dass sich die erfindungsgemäßen agrochemischen Formulierungen herstellen lassen, in dem man
mindestens Fluoxastrobin als agrochemischen Wirkstoff, 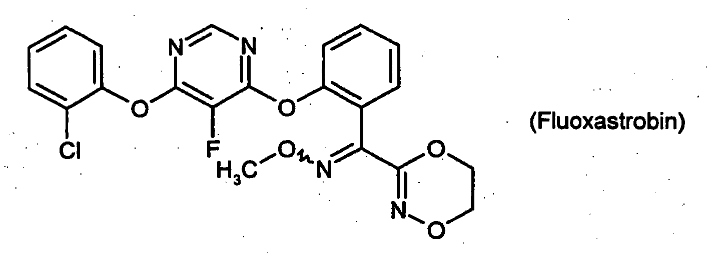 gegebenenfalls mit weiteren agrochemischen Wirkstoffen,
gegebenenfalls mit einem Penetrationsförderer,
gegebenenfalls mit einem Emulgator,
gegebenenfalls mit Zusatzstoffen,
mit γ-Butyrolacton
sowie mit einem Ethylendiaminalkoxylat-Derivat vermischt, welches als Emulsionsstabilisator und / oder als Kristallisationsinhibitor wirkt.

Schließlich wurde gefunden, dass sich die erfindungsgemäßen agrochemischen Formulierungen sehr gut zur Applikation der enthaltenen Wirkstoffe auf Pflanzen und/oder deren Lebensraum eignen.

Es ist als äußerst überraschend zu bezeichnen, dass die erfindungsgemäßen Formulierungen im Gegensatz zu den bekannten Formulierungen nicht auskristallisieren. Das Vorhandensein von γ-Butyrolacton als Lösungsmittel und von Ethylendiaminalkoxylat-Derivaten, wie z.B. Synperonic T/304^{®}, als Emulsions-Stabilisator und Kristallisationsinhibitor, verhindert das Auskristallisieren der Wirkstoffe in der Spritzbrühe.

Neben dem Vorteil, dass in den erfindungsgemäßen Formulierungen Wirkstoffe, mit sehr geringer Wasserlöslichkeit beim Verdünnen mit Wasser eine verminderte Neigung zur Kristallisation zeigen, zeichnen sich die erfindungsgemäßen Formulierungen durch eine Reihe von weiteren Vorteilen aus. So tritt beim Vermischen der erfindungsgemäßen Formulierungen mit Wasser nur eine sehr geringe Schaumbildung auf. Weiterhin begünstigen die Formulierungen die biologische Wirksamkeit der enthaltenen aktiven Komponenten. Zudem wird bei den erfindungsgemäßen Formulierungen eine erhöhte Lagerstabilität erreicht, die aufgrund der Inkompatibilität der Wirkstoffe ansonsten nicht erreicht werden kann.

Besonders bevorzugt sind agrochemische Formulierungen, die als Ethylendiaminalkoxylat-Derivat als weiteren agrochemischen Wirkstoff die Verbindung der Formel 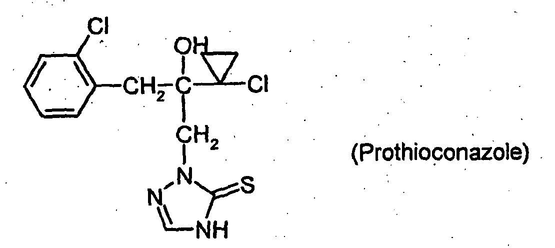 und/oder die Verbindung der Formel

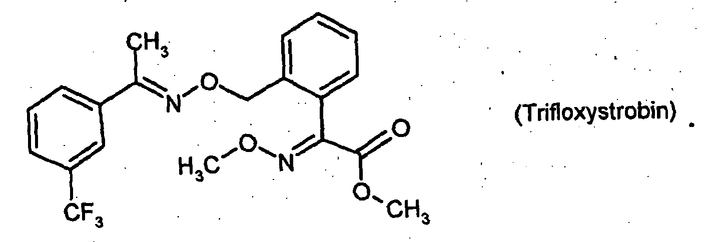

Weiterhin enthalten die erfindungsgemäßen Formulierungen gegebenenfalls Penetrationsförderer. Als Penetrationsförderer kommen im vorliegenden Zusammenhang alle diejenigen Substanzen in Betracht, die üblicherweise eingesetzt werden, um das Eindringen von agrochemischen Wirkstoffen in Pflanzen zu verbessern.

Bevorzugt sind Alkanol-alkoxylate der Formel

R-O-(-AO)ₘH (I)

in welcher
- R: für geradkettiges oder verzweigtes Alkyl mit 4 bis 20 Kohlenstoffatomen steht,
- AO: für einen Ethylenoxid-Rest, einen Propylenoxid-Rest, einen Butylenoxid-Rest oder für Gemische aus Ethylenoxid- und Propylenoxid-Resten steht und
- m: für Zahlen von 2 bis 30 steht.

Eine besonders bevorzugte Gruppe von Penetrationsförderern sind Alkanolalkoxylate der Formel

R-O-(-EO-)ₙ-H (Ia)

in welcher
- R: die oben angegebene Bedeutung hat,
- EO: für -CH₂-CH₂-O- steht und
- n: für Zahlen von 2 bis 20 steht.

Eine weitere besonders bevorzugte Gruppe von Penetrationsförderern sind Alkanol-alkoxylate der Formel

R-O-(-EO-)ₚ-(-PO-)_{q}-H (Ib)

in welcher
- R: die oben angegebene Bedeutung hat,
- EO: für -CH₂-CH₂-O- steht,

- PO: für 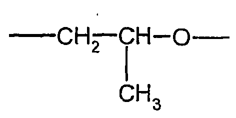 steht,
- p: für Zahlen von 1 bis 10 steht und
- q: für Zahlen von 1 bis 10 steht.

Eine weitere besonders bevorzugte Gruppe von Penetrationsförderern sind Alkanol-Alkoxylate der Formel

R-O-(-PO-)ᵣ-(EO-)ₛ-H (Ic)

in welcher
- R: die oben angegebene Bedeutung hat,
- EO: für -CH₂-CH₂-O- steht,

- PO: für 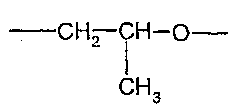 steht,
- r: für Zahlen von 1 bis 10 steht und
- s: für Zahlen von 1 bis 10 steht.

Eine weitere besonders bevorzugte Gruppe von Penetrationsförderern sind Alkanol-Alkoxylate der Formel

CH₃-(CH₂)ₜ-CH₂-O-(-CH₂-CH₂-O-)ᵤ-H (Id)

in welcher
- t: für Zahlen von 8 bis 13 steht
und
- u: für Zahlen von 6 bis 17 steht.

In den zuvor angegebenen Formeln steht
- R: vorzugweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

Als Beispiel für ein Alkanol-Alkoxylat der Formel (Ic) sei 2-Ethyl-hexyl-alkoxylat der Formel 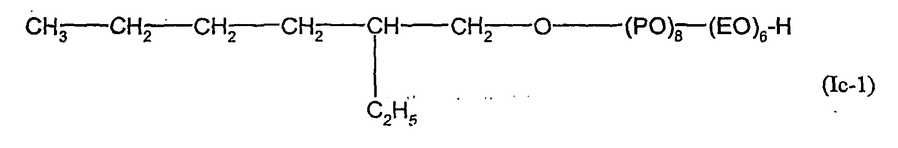 genannt, in welcher
- EO: für -CH₂-CH₂-O- steht,
- PO: für 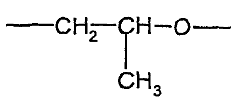 steht und
die Zahlen 8 und 6 Durchschnittswerte darstellen.

Besonders bevorzugte Alkanol-Alkoxylate der Formel (Id) sind Verbindungen dieser Formel, in denen
- t: für Zahlen von 9 bis 12 steht und
- u: für Zahlen von 7 bis 9 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Beispielhaft genannt sei Alkanol-Alkoxylat der Formel (Id), in welcher
- t: für den Durchschnittswert 10,5 steht und
- u: für den Durchschnittswert 8,4 steht.

Die Alkanol-Alkoxylate der angegebenen Formeln sind bekannt oder lassen sich nach bekannten Methoden herstellen (vgl. WO 98-35 553, WO 00-35 278 und EP-A 0 681 865).

Als Zusatzstoffe, die in den erfmdungsgemäßen Formulierungen enthalten sein können, kommen alle üblichen Formulierhilfsmittel in Frage, wie z.B. organische Solventien, Entschäumer, Dispergiermittel, Konservierungsmittel, Zitronensäure und ihre Hydrate, Farbstoffe, Füllstoffe und auch Wasser.

Als Entschäumer kommen übliche, in Formulierungen von agrochemischen Wirkstoffen vorhandene Entschäumer in Frage. Beispielhaft genannt seien Silikonöle, Dispersionen von Silikonölen, Magnesiumstearat, Phosphin- und Phosphonsäuren. Besonders bevorzugt ist Fluowet PL 80^{®}.

Als organische Solventien kommen dabei alle üblichen organischen Lösungsmittel in Betracht, welche die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso^{®}, Mineralöle, wie Testbenzin, Petroleum, Alkylbenzole und Spindelöl, weiterhin Tetrachlormethan, Chloroform, Methylenchlorid und Dichlormethan, außerdem Ester, wie Ethylacetat, ferner Lactone, wie Butyrolacton, außerdem Lactame, wie N-Methylpyrrolidon, N-Octylpyrrolidon und N-Methylcaprolactam, und auch Alkancarbonsäureamide, wie Decancarbonsäure-dimethylamid und Octancarbonsäure-dimethylamid, sowie Dimethylformamid. Bevorzugt sind wasserlöslichen Lösungsmittel wie zum Beispiel N-Methylpyrrolidon und DMSO. Besonders bevorzugt ist γ-Butyrolacton.

Als Emulgatoren kommen übliche, in Formulierungen von agrochemischen Wirkstoffen vorhandene oberflächenaktive Substanzen in Frage. Beispielhaft genannt seien ethoxylierte Nonylphenole, Polyethylenglykolether von linearen Alkoholen, Umsetzungsprodukte von Alkylphenolen mit Ethylenoxid und/oder Propylenoxid, Ethylenoxid- Propylenoxid-Blockcopolymere, Polyethylenglykole und Polypropylenglykole, weiterhin Fettsäureester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristryl-phenol-alkoxylate. Ganz besonders bevorzugt sind Tristyryl-phenol-ethoxylate zusammen mit Tristyryl-phenol-ethoxy-propoxylaten.

Als Dispergiermittel kommen alle üblicherweise in Pflanzenschutzmitteln für diesen Zweck eingesetzten Substanzen in Betracht. Vorzugsweise genannt seien neben den oben unter Emulgatoren genannten Beispielen natürliche und synthetische, wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Polymethacrylsäure und Co-Polymerisate aus (Meth)acrylsäure und (Meth)acrylsäureestem, und außerdem auch mit Alkalimetallhydroxid neutralisierte Co-Polymerisate aus Methacrylsäure und Methacrylsäureester.

Als Konservierungsmittel kommen alle üblicherweise für diesen Zweck in Pflanzenbehandlungsmitteln vorhandenen Substanzen in Betracht. Als Beispiele genannt seien Preventol^{®} und Proxel^{®}.

Als Farbstoffe kommen alle für die Herstellung von Pflanzenschutzmitteln üblichen anorganischen oder organischen Farbstoffe in Frage. Beispielhaft genannt seien Titandioxid, Farbruß, Zinkoxid und Blaupigmente.

Als Füllstoffe kommen alle üblicherweise für diesen Zweck in Pflanzenschutzmitteln eingesetzten Substanzen in Betracht. Vorzugsweise genannt seien anorganische Partikel, wie Carbonate, Silikate und Oxide mit einer mittleren Teilchengröße von 0,005 bis 5 µm, besonders bevorzugt von 0,02 bis 2 µm. Beispielhaft erwähnt seien Siliziumdioxid, sogenannte hochdisperse Kieselsäure, Kieselgele, sowie natürliche und synthetische Silikate und Alumosilikate.

Verbindungen, die als Emulsions-Stabilisatoren und/oder Kristallisationsinhibitoren wirken, sind Besonders bevorzugt ist das Ethylendiaminalkoxylat mit dem Handelsnamen Synperonic T/304^{®} der Fa. Uniqema.

Der Gehalt an den einzelnen Komponenten kann in den erfindungsgemäßen Formulierungen innerhalb eines größeren Bereichs variiert werden. So liegen die Konzentrationen
- an agrochemischen Wirkstoffen im Allgemeinen zwischen 1 und 40 Gew.-%, vorzugsweise zwischen 20 und 30 Gew.-%,
- an Penetrationsförderern im Allgemeinen zwischen 0 und 25 Gew.-%, vorzugsweise zwischen 10 und 25 Gew.-%,
- an Emulgator im Allgemeinen zwischen 5 und 30 Gew.-%, vorzugsweise zwischen 10 und 25 Gew.-%,
- an Zusatzstoffen im Allgemeinen zwischen 0 und 40 Gew.-%, vorzugsweise zwischen 0 und 2 Gew.-%,
- an Ethylendiaminalkoxylat-Derivaten, die als Emulsions-Stabilisatoren und/oder Kristallisationsinhibitoren wirken im Allgemeinen zwischen 5 und 20 Gew.-%, vorzugsweise zwischen 5 und 15 Gew.-%,
- an γ-Butyrolacton im Allgemeinen zwischen 20 bis 70 Gew.-%, vorzugsweise zwischen 30 und 50 Gew.-%.

Die Herstellung der erfindungsgemäßen agrochemischen Formulierungen erfolgt in der Weise, dass man die Komponenten in den jeweils gewünschten Verhältnissen miteinander vermischt. Den agrochemischen Wirkstoff setzt man im allgemeinen entweder in fein gemahlener Form oder in Form einer Lösung oder Suspension in einem organischen Solvens ein. Es ist außerdem möglich, den agrochemischen Wirkstoff in Form einer Schmelze einzusetzen.

Die Temperaturen können bei der Durchführung des erfindungsgemäßen Verfahrens in einem bestimmten Bereich variiert werden. Man arbeitet im allgemeinen bei Temperaturen zwischen 0°C und 80°C, vorzugsweise zwischen 10°C und 60°C.

Bei der Durchführung des erfindungsgemäßen Verfahrens geht man im Allgemeinen so vor, dass man den Penetrationsförderer mit einem oder mehreren Wirkstoffen sowie gegebenenfalls mit Zusatzstoffen, dem Emulsions-Stabilisator/Kristallisationsinhibitor und γ-Butyrolacton vermischt. Die Reihenfolge, in der die Komponenten miteinander vermischt werden, ist beliebig. In einer bevorzugten Variante geht man jedoch so vor, dass man den Emulsions-Stabilisator/Kristallisationsinhibitor Synperonic T/304^{®} mit einem oder mehreren agrochemischen Wirkstoffen sowie mit weiteren Zusatzstoffen vermischt und die so entstehende Vormischung in Wasser dispergiert, so dass man Emulsionen, Suspensionen oder Lösungen erhält.

Zur Durchführung des erfindungsgemäßen Verfahrens kommen übliche Geräte in Betracht, die zur Herstellung von agrochemischen Formulierungen eingesetzt werden.

Die erfindungsgemäßen agrochemischen Formulierungen können in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Die Aufwandmenge an den erfindungsgemäßen agrochemischen Formulierungen kann innerhalb eines größeren Bereiches variiert werden. Sie richtet sich nach den jeweiligen agrochemischen Wirkstoffen und nach deren Gehalt in den Formulierungen.

Mit Hilfe der erfindungsgemäßen Formulierungen lassen sich agrochemische Wirkstoffe in besonders vorteilhafter Weise auf Pflanzen und/oder deren Lebensraum ausbringen.

Dabei wird die Kristallisationsneigung fester Wirkstoffe in der Spritzbrühe deutlich herabgesetzt wodurch die unproblematische Applikationsfähigkeit gewährleistet wird.

Die Erfindung wird durch die nachfolgenden Beispiele veranschaulicht. Die Erfindung ist jedoch nicht auf die Beispiele limitiert.

### Herstellungsbeispiele

Die nachstehende Tabelle erläutert die in den Beispielen eingesetzten Komponenten.

| % w/w | Chemische Bezeichnung der Komponente | Funktion | Bezugsquelle |
|---|---|---|---|
| 5-15 | Fluoxastrobin | Wirkstoff | Bayer CropScience AG |
| 5-20 | Prothioconazole | Wirkstoff | Bayer CropScience AG |
| 0-10 | Trifloxystrobin | Wirkstoff | Bayer CropScience AG |
| 10-25 | 2-Ethylhexanolalkoxylat | Penetrationsförderer | Bayer AG |
| 10-25 | Tristyrylphenolalkoxylate | Emulgator | Bayer AG |
| 5-15 | Synperonic T/304^{®} | Emulsions-Stabilisator/Kristallisationsinhibitor Ethylendiaminalkoxylat | Fa. Uniqema |
| 0-2 | Zitronensäure-Monohydrat oder wasserfreie Zitronensäure | pH-Stabilisator | |
| 0-0.1 | Fluowet PL 80^{®} | Entschäumer | Fa. Clariant GmbH |
| 20-70 | δ-Butyrolacton | Lösungsmittel | |

### Beispiel 1

Eine Mischung bestehend aus

| | |
|---|---|
| 8.7 g | Fluoxastrobin |
| 8.7 g | Prothioconazole |
| 15 g | 2-Ethylhexanolalkoxylat |
| 15 g | Tristyrylphenol-ethoxy-propoxylat |
| 5 g | Tristyrylphenolethoxylat |
| 10 g | Synperonic T/304^{®} und |
| 37.6 g | δ-Butyrolacton |

wurde gemischt und die so entstehende Vormischung in Wasser dispergiert, so dass man eine Emulsion erhält. Die Kristallisation des Produkts aus der Spritzbrühe wurde beobachtet und verglichen.

### Beispiel 2

Eine Mischung bestehend aus

| | |
|---|---|
| 6.5 g | Fluoxastrobin |
| 6.5 g | Trifloxystrobim |
| 12.9 g | Prothioconazole |
| 12 g | 2-Ethylhexanolalkoxylat |
| 12 g | Tristrylphenol-ethoxy-propoxylat |
| 4.5 g | Tristyrylphenolethoxylat |
| 8 g | Synperonic T/304^{®} und |
| 37.6 g | δ-Butyrolacton |

wurde gemischt und die so entstehende Vormischung in Wasser dispergiert, so dass man eine Emulsion erhält.

### Beispiel 3 (Vergleichsbeispiel)_{:}

Eine Mischung bestehend aus

| | |
|---|---|
| 8.7 g | Fluoxastrobin |
| 8.7 g | Prothioconazole |
| 15 g | 2-Ethylhexanolalkoxylat |
| 15 g | Tristyrylphenol-ethoxy-propoxylat |
| 15 g | Tristyrylphenol-ethoxy-propoxylat |
| 5 g | Tristyrylphenolethoxylat |
| 47.6 g | 5-Butyrolacton |

wurde gemischt und die so entstehende Vormischung in Wasser dispergiert, so dass man eine Emulsion erhält. Die Kristallisation des Produkts aus der Spritzbrühe wurde beobachtet und verglichen.

### Kristallisationstest / Applikationstest

Die Applikationseigenschaften der Formulierungen können in handelsüblichen Feldspritzen mit unterschiedlichen Filter-Düsen-Kombinationen geprüft werden.

Dazu werden die Formulierungen im Spritztank der Feldspritze mit Wasser verdünnt, wobei sich die sogenannte Spritzbrühe, in diesem Fall eine Emulsion, bildet. Von den erfindungsgemäßen Formulierungen werden 1.51 des Emulsionskonzentrates mit 200 Wasser verdünnt.

Die so erhaltenen Spritzbrühen werden bis zur vollständigen Entleerung des Spritztankes ausgespritzt. Diese Applikation erfolgt dann insgesamt zwölf mal hintereinander.

Zwischen der 5. und 6. Applikation wird die Spritzbrühe 24 Stunden und zwischen der 9. und 10. Applikation 72 Stunden ungerührt stehen gelassen. Nach der 12. Applikation werden die Filter und Düsen der Feldspritze ausgebaut und hinsichtlich möglicher Ablagerungen und Verstopfungen überprüft.

### Kristallisationstest / Applikationstest mit Beispiel 1

Die erfindungsgemäße Formulierung des Beispiels 1 zeigte nach 12 Applikationen (12 mal 1.5 L Formulierung + 200 1 Wasser) ohne zwischenzeitige Reinigung des Spritztanks eine maximale Filterbelegung bei einem 80 mesh Düsenfilter von bis zu 10 % und bei einem 50 mesh Düsenfilter von ca. 1 %.

### Kristallisationstest / Applikationstest mit Beispiel 3

Das Vergleichsbeispiel 3 zeigte bei dem gleichen Applikationstest mit der Feldspritze nach der 12. Applikation eine maximale Filterbelegung bei einem 80 mesh Düsenfilter von bis zu 90 % und bei einem 50 mesh Düsenfilter von ca. 25 %.

Derartige Filterbeläge der Düsenfilter bedeuten schon eine signifikante Beeinträchtigung bei der Applikation der Spritzbrühe. Bei diesen Filterbelägen vor der Spritzdüse fällt der Spritzfächer (Winkel mit dem der Spritznebel aus der Spritzdüse austritt) zusammen und eine völlige Verstopfung des Düsenfilters, so dass gar kein Produkt mehr aus der Spritzdüse austreten kann, steht unmittelbar bevor. Die erfindungsgemäße Formulierung des Beispiels 1 zeigt dagegen keinerlei Beeinträchtigungen.

## Patentansprüche

1. Formulierung enthaltend
a) mindestens Fluoxastrobin als agrochemischen Wirkstoff, 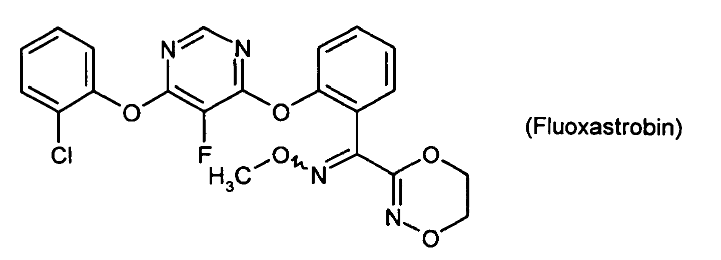
b) gegebenenfalls einen Penetrationsförderer,
c) gegebenenfalls einen Emulgator,
d) gegebenenfalls Zusatzstoffe,
**dadurch gekennzeichnet, dass** die Formulierung γ-Butyrolacton und mindestens ein Ethylendiaminalkoxylat-Derivat enthält, welches als Emulsionsstabilisator und / oder als Kristallisationsinhibitor wirkt.

2. Formulierung gemäß Anspruch 1, **dadurch gekennzeichnet, dass** die Formulierung Synperonic T/304^{®} enthält.

3. Formulierung gemäß einem der Ansprüche 1 bis 2, **dadurch gekennzeichnet, dass** als weiterer agrochemischer Wirkstoff die Verbindung der Formel 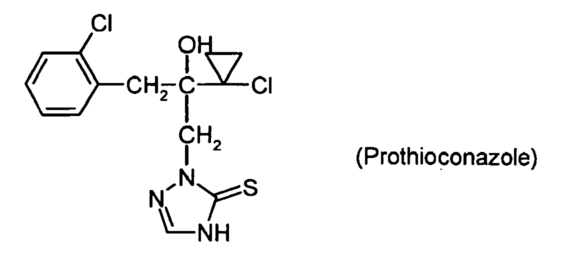 enthalten ist.

4. Formulierung gemäß einem der Ansprüche 1 bis 3, **dadurch gekennzeichnet, dass** als weiterer agrochemischer Wirkstoff die Verbindung der Formel 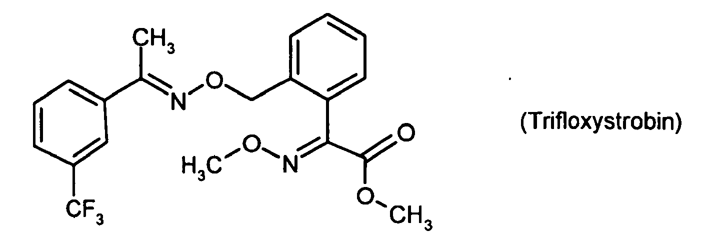 enthalten ist.

5. Verfahren zur Herstellung von Formulierungen gemäß Anspruch 1, **dadurch gekennzeichnet, dass** man
mindestens Fluoxastrobin als agrochemischen Wirkstoff, 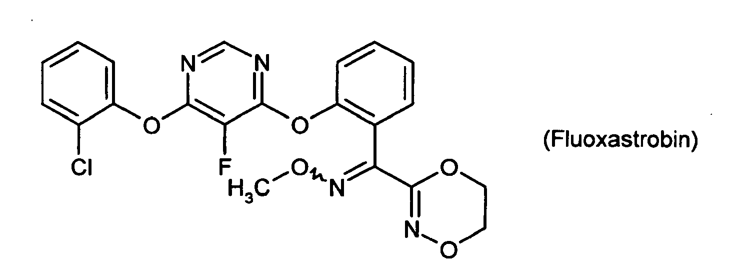 gegebenenfalls mit weiteren agrochemischen Wirkstoffen,
gegebenenfalls mit einem Penetrationsförderer,
gegebenenfalls mit einem Emulgator,
gegebenenfalls mit Zusatzstoffen,
mit γ-Butyrolacton
sowie mit einem Ethylendiaminalkoxylat-Derivat vermischt, welches als Emulsionsstabilisator und / oder als Kristallisationsinhibitor wirkt.

6. Verwendung von agrochemischen Formulierungen gemäß Anspruch 1 zur Applikation der enthaltenden agrochemischen Wirkstoffe auf Pflanzen und/oder deren Lebensraum.

## Claims

1. Formulation containing
a) at least fluoxastrobin as agrochemical active ingredient, 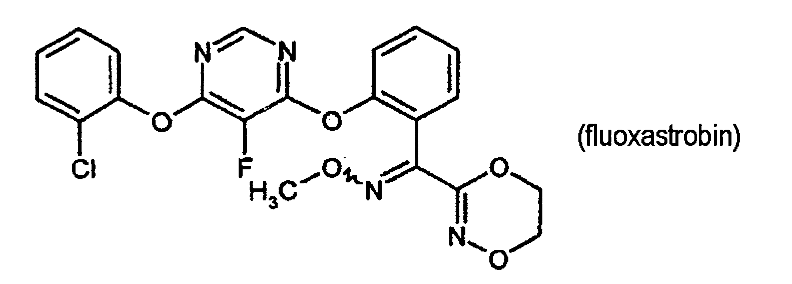
b) optionally a penetration promoter,
c) optionally an emulsifier,
d) optionally additives,
**characterised in that** the formulation contains γ-butyrolactone and at least one ethylenediamine alkoxylate derivative which acts as an emulsion stabiliser and/or as a crystallisation inhibitor.

2. Formulation according to Claim 1, **characterised in that** the formulation contains Synperonic T/304®.

3. Formulation according to either of Claims 1 and 2, **characterised in that** the compound of the formula 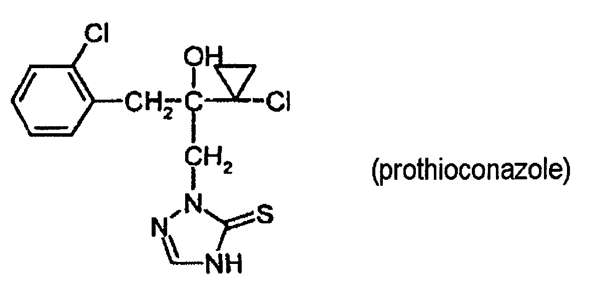 is included as a further agrochemical active ingredient.

4. Formulation according to any one of Claims 1 to 3, **characterised in that** the compound of the formula 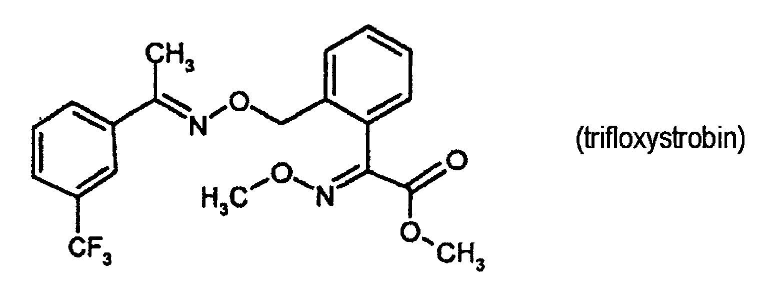 is included as a further agrochemical active ingredient.

5. Method for producing formulations according to Claim 1, **characterised in that**
at least fluoxastrobin as an agrochemical active ingredient, 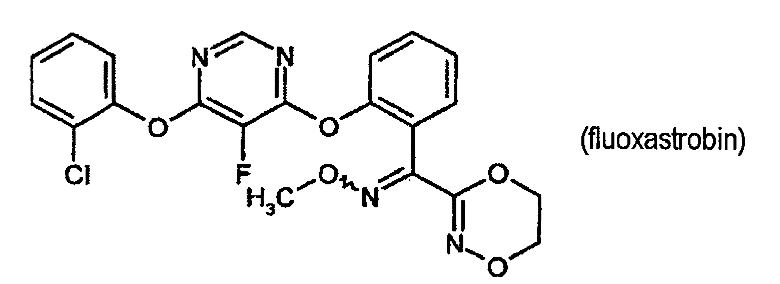 is mixed
optionally with further agrochemical active ingredients,
optionally with a penetration promoter,
optionally with an emulsifier,
optionally with additives,
with γ-butyrolactone
and also with an ethylenediamine alkoxylate derivative which acts as an emulsion stabiliser and/or as a crystallisation inhibitor.

6. Use of agrochemical formulations according to Claim 1 for applying the agrochemical active ingredients therein to plants and/or their habitat.

## Revendications

1. Formulation contenant
a) au moins de la fluoxastrobine comme substance active agrochimique 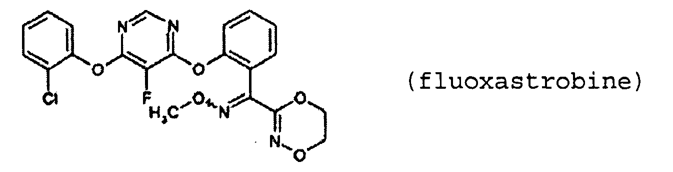
b) éventuellement un agent facilitant la pénétration,
c) le cas échéant un émulsifiant,
d) éventuellement des additifs,
**caractérisée en ce que** la formulation contient de la γ-butyrolactone et au moins un dérivé d'alkoxylation de l'éthylènediamine qui agit comme un stabilisant de l'émulsion et/ou comme un inhibiteur de cristallisation.

2. Formulation suivant la revendication 1, **caractérisée en ce que** la formulation contient du Synperonic T/304^{®} .

3. Formulation suivant l'une des revendications 1 et 2, **caractérisée en ce que** le composé de formule 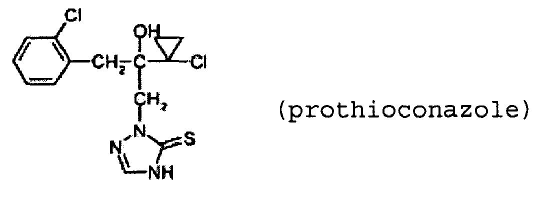 est contenu comme autre substance active agrochimique.

4. Formulation suivant l'une des revendications 1 à 3, **caractérisée en ce que** le composé de formule 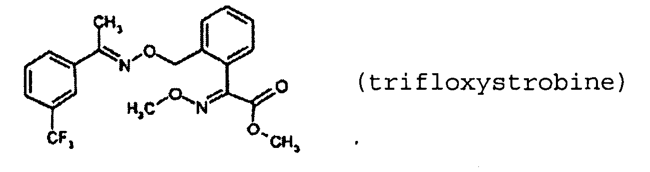 est contenu comme autre substance active agrochimique.

5. Procédé de production de formulations suivant la revendication 1, **caractérisé en ce qu'**on mélange au moins de la fluoxastrobine comme substance active agrochimique 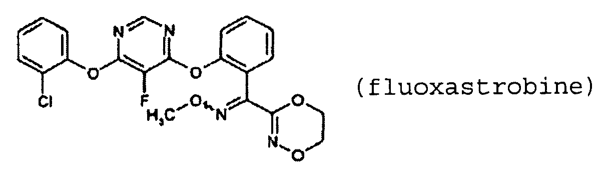 éventuellement avec d'autres substances actives agrochimiques,
le cas échéant avec un agent facilitant la pénétration,
éventuellement avec un émulsifiant,
le cas échéant avec des additifs,
avec de la γ-butyrolactone
ainsi qu'avec un dérivé d'alkoxylation de l'éthylène-diamine qui agit comme un stabilisant de l'émulsion et/ou comme un inhibiteur de cristallisation.

6. Utilisation de formulations agrochimiques suivant la revendication 1 en vue de l'application des substances actives agrochimiques qu'elles contiennent à des plantes et/ou à leur milieu.
